# EUROPÄISCHE PATENTSCHRIFT

(11) **EP 0 812 954 B1**
(45) Veröffentlichungstag und Bekanntmachung des Hinweises auf die Patenterteilung: **19.09.2001**
(21) Anmeldenummer: 97106857.2
(22) Anmeldetag: 25.04.1997
(51) Int. Cl.: D21F 3/02, D21G 1/02, F16C 13/00

(54) **Presswalze**
Press roll
Rouleau de presse

(30) Priorität: 31.05.1996 DE 19622020
(43) Veröffentlichungstag der Anmeldung: 17.12.1997
(73) Patentinhaber: Voith Paper Patent GmbH, 89522 Heidenheim (DE)
(72) Erfinder: Schiel, Christian, 89522 Heidenheim (DE)

(56) Entgegenhaltungen:
- EP-A- 0 345 501
- US-A- 4 841 610
- US-A- 4 984 343

## Beschreibung

Die Erfindung betrifft eine Preßwalze zur Behandlung einer Materialbahn in einem mit einer Gegenfläche gebildeten Preßspalt, mit einem sich entlang des Preßspaltes erstreckenden Preßschuh, einem über den Preßschuh geführten Preßmantel und insbesondere mehreren an einem stationären Träger abgestützten und in Richtung der Walzenachse hintereinander angeordneten Kraftelementen, die vorzugsweise jeweils druckfluidbetätigt und durch eine Zylinder/Kolben-Einheit gebildet sind und durch deren bewegliche Kolben oder dergleichen der Preßschuh beaufschlagbar ist, um den Preßmantel gegen die Gegenfläche zu pressen.

Eine Preßwalze dieser Art ist beispielsweise aus der EP 0 345 501 B1 bekannt. Bei einer solchen Preßwalze sind die Herstellungskosten und der Montageaufwand in erheblichem Umfang von dem gewünschten Grad der Gleichförmigkeit der Linienkraftverteilung längs des Preßspaltes quer über die zu behandelnde Materialbahn, bei der es sich insbesondere um eine Papier- oder Kartonbahn handeln kann, abhängig. Ist der Preßschuh durch mehrere, in Richtung der Walzenachse im Abstand t hintereinander angeordnete einzelne Kraftelemente abgestützt, so beträgt dessen maximale Durchbiegung zwischen den Kraftelementen f = c · P_{L} · t⁴. Dabei ist c eine Konstante, die die elastische Nachgiebigkeit des Preßschuhs berücksichtigt. Mit P_{L} ist die Linienkraft und mit t die Spannweite zwischen den Kraftelementen angegeben.

Aus der die maximale Durchbiegung definierenden Beziehung ergibt sich, daß hinsichtlich einer gleichmäßigen Linienkraftverteilung die Spannweite besonders kritisch ist. Die Linienkraft wird nämlich an den Stellen, an denen der Preßschuh durchhängt, kleiner. Bei größerem Durchhang und bei geringerer Kompressibilität der durch den Preßspalt geführten Materialbahn kann die Linienkraft in der Mitte zwischen den Kraftelementen sogar auf Null absinken.

Um einem unerwünscht hohen Durchhang entgegenzuwirken, ist bei der aus der EP 0 345 501 B1 bekannten Preßwalze eine zweireihige Anordnung von Kraftelementen vorgesehen, bei der sich die beiden parallelen Reihen von Kraftelementen jeweils quer zur Materialbahn längs der Walzenachse erstrecken. Gegenüber einer einreihigen oder einzeiligen Anordnung von Kraftelementen bringt die bekannte zweireihige Anordnung zwar den Vorteil mit sich, daß bei gleicher durch die einzelnen Kolben insgesamt gebildeter Kolbenfläche der Stützabstand zwischen den Kraftelementen in Richtung der Walzenachse halbiert wird. Die Anzahl der durch eine jeweilige Zylinder/Kolben-Einheit gebildeten Kraftelemente erhöht sich jedoch auf das Vierfache. Vier kleiner dimensionierte Kraftelemente mit kleinerem Zylinder und kleinerer Kolbenfläche sind nun aber wesentlicher kostenaufwendiger als ein entsprechend größer dimensioniertes Kraftelement mit entsprechend größerem Zylinder und entsprechend größerem Kolben. Die Montage einer höheren Anzahl von Kraftelementen ist zwangsläufig auch zeitraubender. Schließlich beanspruchen die bei der bekannten Preßwalze zur Abstützung des Preßschuhs verwendeten Kolbenstangen relativ viel Platz in radialer Richtung.

Ziel der Erfindung ist es, eine Preßwalze der eingangs genannten Art zu schaffen, die bei kompaktem Aufbau und insbesondere minimalem radialem Platzbedarf sowie bei einer minimalen Anzahl von Kraftelementen insbesondere auch bei je nach Walze unterschiedlicher Kraftelementeteilung eine optimale Linienkraftverteilung quer zur Materialbahn über den Preßspalt gewährleistet.

Dieser Aufgabe wird nach der Erfindung dadurch gelöst, daß der Kolben wenigstens eines Kraftelements und/oder ein gegenüberliegender Bereich des Preßschuhs so ausgebildet ist, daß die zwischen dem Kolben und dem Preßschuh auftretenden Stützkräfte zumindest im wesentlichen in einander gegenüberliegenden, auf unterschiedlichen Seiten einer zur Walzenachse senkrechten Kolbenmittelebene angeordneten Kolbenrandbereichen konzentriert sind.

Der Erfindung liegt somit im wesentlichen der Gedanke zugrunde, den Kolben eines jeweiligen Kraftelements nicht zentral gegen den Preßschuh abzustützen, sondern die Stützkräfte zwischen dem Kolben und dem Preßschuh mehr oder weniger in entgegengesetzten Richtungen der Walzenachse in Richtung der Kolbenränder zu konzentrieren. Im Ergebnis führt dies zu einer Verringerung der effektiven Spannweite zwischen den Kraftelementen und damit entsprechend der eingangs genannten Beziehung zu einer um die Potenz vier verstärkten Verringerung des maximalen Durchhanges des Preßschuhs zwischen den Unterstützungspunkten.

Bei einer vorteilhaften praktischen Ausführungsvariante wird die gewünschte Stützkräftekonzentration dadurch bewirkt, daß der Kolben und/oder der Preßschuh mit wenigstens zwei in Richtung der Walzenachse einen Abstand voneinander aufweisenden diskreten, erhabenen Kontaktflächen versehen ist. Zumindest die Kontaktflächen sind zweckmäßigerweise mit jeweils einem beispielsweise aufgeklebten oder galvanisch aufgebrachten Gleitbelag versehen, der aus einer Schicht eines Werkstoffes besteht, der zu einer metallischen Gegenfläche einen besonders niedrigen Reibungskoeffizienten aufweist, z.B. mit Gleitstoff versetztes Gewebe, wobei die Gleitstoffe PTFE, Molybdänsulfit, Polyätylen oder lamellarer Kohlenstoff sein können, oder galvanisch aufgetragene dünne Schichten.

Optimale Ergebnisse lassen sich erzielen, wenn der in Richtung der Walzenachse gemessene Abstand zwischen den Flächenschwerpunkten der beiden diskreten Kontaktflächen zumindest gleich der halben Kolbenteilung der Kolben einer Mehrzahl von in Richtung der Walzenachse hintereinander angeordneten Kraftelementen und vorzugsweise größer als diese halbe Kolbenteilung ist, so daß sich ein axialer Abstand zwischen den Flächenschwerpunkten der benachbarten Kontaktflächen einander benachbarter Kolben ergibt, der kleiner als die halbe Kolbenteilung ist.

Zur Kompensation eines größeren Abstandes zwischen den diskreten Kontaktflächen eines Kolbens kann zwischen diesen Kontaktflächen wenigstens eine vorzugsweise im Bereich der Kolbenmitte angeordnete Hydrostatiktasche vorgesehen sein, so daß in jedem Fall auch ein störender Durchhang im mittleren Kolbenbereich ausgeschlossen ist.

Gemäß einer weiteren praktischen Ausführungsvariante wird die Stützkräftekonzentration auf den Kolbenrandbereich durch eine zwischen dem Kolben und dem Preßschuh angeordnete, vorzugsweise im Kolben vorgesehene ringförmige Hydrostatiktasche bewirkt.

Eine jeweilige, im Kolben vorgesehene Hydrostatiktasche kann über eine Drossel mit dem Zylinderraum des durch eine Zylinder/Kolben-Einheit gebildeten Kraftelements verbunden oder auch unabhängig vom Zylinderdruckraum mit Druckfluid beaufschlagbar sein.

Im Fall der Verwendung einer die Stützkräftekonzentration auf den Kolbenrandbereich bewirkenden ringförmigen Hydrostatiktasche kann innerhalb der Ringtasche eine im Kolben ausgebildete drucklose Tasche vorgesehen sein, in die vorzugsweise eine nach außen führende Entlastungsbohrung mündet.

Der vorzugsweise als Flachkolben ohne Kolbenstange ausgebildete Kolben ist zweckmäßigerweise durch wenigstens eine zwischen ihm und dem stationären Träger bzw. dem Zylinderboden angeordnete, zur Kolbenachse exzentrische elastische Stütze gegen ein Verdrehen gesichert.

Weitere vorteilhafte Ausführungsvarianten der erfindungsgemäßen Preßwalze sind in den Unteransprüchen angegeben.

Die Erfindung wird im folgenden anhand von Ausführungsbeispielen unter Bezugnahme auf die Zeichnung näher erläutert; in dieser zeigen
- Figur 1: eine schematische Schnittdarstellung eines Teils eines Ausführungsbeispiels einer Preßwalze im Bereich eines Kraftelements,
- Figur 2: eine Draufsicht des Kolbens des in Figur 1 gezeigten Kraftelements, wobei der Preßschuh weggelassen ist,
- Figur 3: eine schematische Schnittdarstellung eines Teils eines weiteren Ausführungsbeispiels einer Preßwalze im Bereich eines Kraftelements,
- Figur 4: eine Draufsicht des Kolbens des in Figur 3 gezeigten Kraftelements, wobei der Preßschuh wieder weggelassen ist und
- Figur 5: einen Längsschnitt durch eine Preßwalze mit drei benachbarten Zylinder/Kolben-Einheiten.

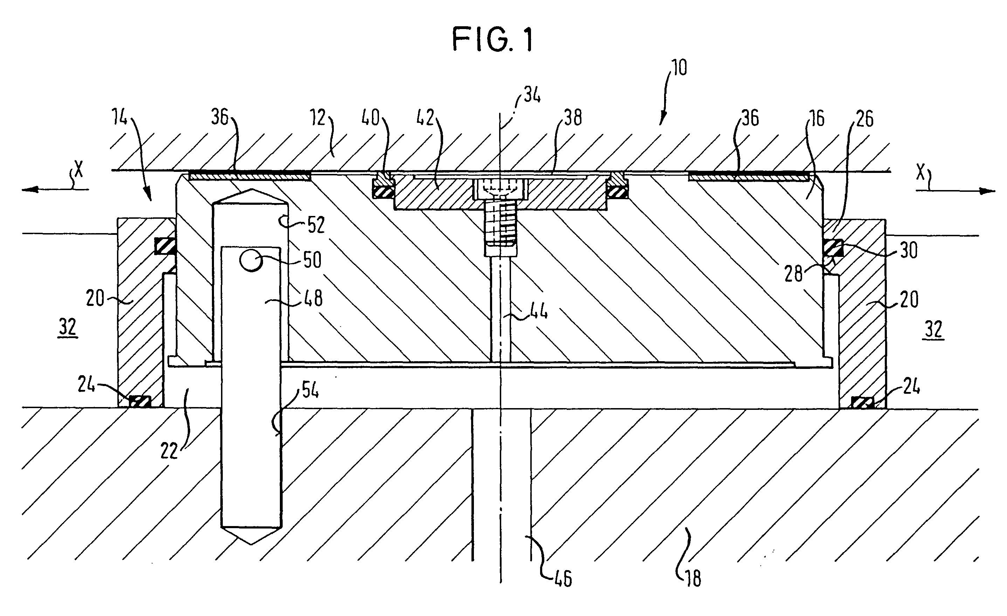

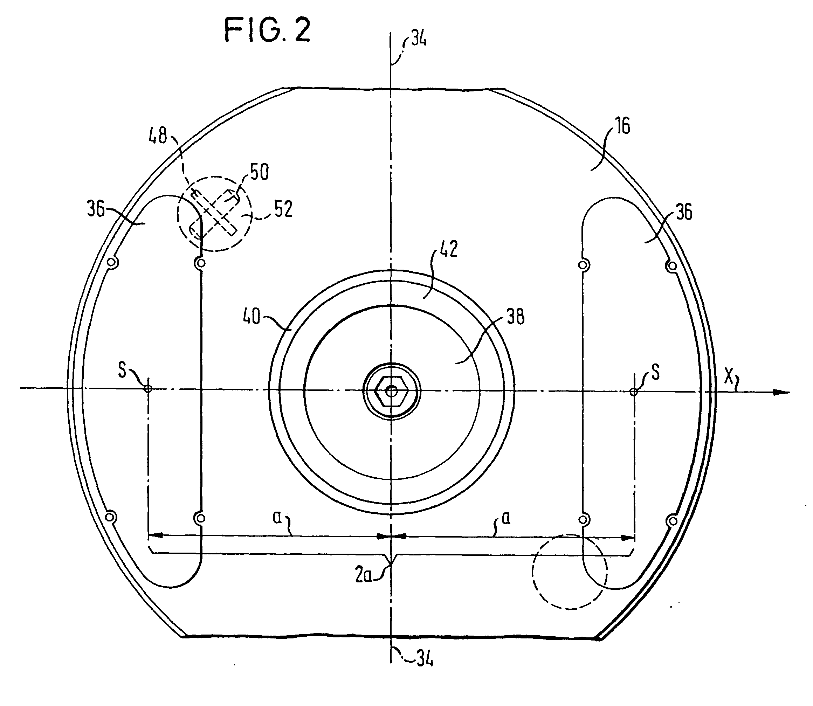

In den Figuren 1 und 2 ist ein Teil einer Preßwalze 10 dargestellt, die zur Behandlung einer Materialbahn wie insbesondere einer Papier- oder Kartonbahn in einem mit einer Gegenfläche gebildeten Preßspalt (nicht gezeigt) dient.

Hierzu umfaßt die Preßwalze 10 einen sich entlang des Preßspaltes erstreckenden Preßschuh 12, einen über den Preßschuh 12 geführten Preßmantel (nicht gezeigt) und mehrere, in Richtung der Walzenachse X hintereinander angeordnete, jeweils druckfluidbetätigte und durch eine Zylinder/Kolben-Einheit gebildete Kraftelemente 14 (nur eines dargestellt), durch deren bewegliche Kolben 16 der Preßschuh 12 beaufschlagbar ist, um den Preßmantel gegen die Gegenfläche zu pressen, die durch eine Gegenwalze gebildet sein kann. Die Kraftelemente 14 sind auf der vom Preßschuh 12 abgewandten Seite an einem stationären Träger 18 befestigt.

Der als Flachkolben ohne Kolbenstange ausgebildete jeweilige Kolben 16 ist in einem flachen, bodenlosen Zylinderteil 20 des Kraftelements 14 geführt. Dieses flache, bodenlose Zylinderteil 20 ist auf der Unterseite (vgl. Figur 1) an dem stationären Träger 18 abgestützt und durch diesen zur Bildung eines den Kolben 16 beaufschlagenden Druckraums dicht abgeschlossen. Hierzu ist zwischen dem Zylinderteil 20 und dem stationären Träger 18 eine Ringdichtung 24 vorgesehen.

Das Zylinderteil 20 besitzt an seinem oberen, dem Preßschuh 12 zugewandten Ende einen Innenbund 26, der mit einer nach innen offenen Ringnut 28 versehen ist, in die eine am Außenumfang des Kolbens 16 anliegende Ringdichtung 30 eingesetzt ist. Das Zylinderteil 20 selbst ist in eine entsprechende nutförmige Aufnahme 32 im Träger 18 eingesetzt, die sich in Achsrichtung X erstreckt.

Der Kolben 16 des Kraftelements 14 ist nun so ausgebildet, daß die zwischen ihm und dem Preßschuh 12 auftretenden Stützkräfte zumindest im wesentlichen in einander gegenüberliegenden, auf unterschiedlichen Seiten einer zur Walzenachse X senkrechten Kolbenmittelebene 34 angeordneten Kolbenrandbereichen konzentriert sind.

Hierzu ist der Kolben 14 mit zwei in Richtung der Walzenachse X einen Abstand voneinander aufweisenden diskreten, die Stützkräftekonzentration bewirkenden erhabenen Kontaktflächen versehen, die im vorliegenden Fall durch auswechselbare Kontaktplatten 36 gebildet sind. Beim dargestellten Ausführungsbeispiel ist auf jeder Seite der Kolbenmittelebene 34 jeweils eine solche Kontaktplatte 36 angeordnet. Jede dieser Kontaktplatten 36 ist zudem vorzugsweise mit einem z.B. galvanisch aufgebrachten Gleitbelag versehen. Wie anhand von Figur 2 zu erkennen ist, besitzen die Kontaktplatten 36 im vorliegenden Fall eine im wesentlichen nierenförmige Gestalt.

Der in Richtung der Walzenachse X gemessene Abstand 2a zwischen den Flächenschwerpunkten S der beiden diskreten, durch die Kontaktplatten 36 gebildeten Kontaktflächen ist zumindest gleich der halben Kolbenteilung t der Kolben eine Mehrzahl von in Richtung der Walzenachse X hintereinander angeordneten Kraftelementen 14. Vorzugsweise ist dieser Abstand 2a zwischen den beiden Flächenschwerpunkten S größer als die halbe Kolbenteilung, so daß sich ein axialer Abstand s zwischen den Flächenschwerpunkten S der benachbarten Kontaktflächen einander benachbarter Kolben ergibt, der kleiner als diese halbe Kolbenteilung ist. In Figur 2 ist mit dem Abstand a der Abstand zwischen einem jeweiligen Flächenschwerpunkt S und der Kolbenmittelebene 34 angegeben.

Zwischen den beiden in Richtung der Walzenachse X beabstandeten Kontaktplatten 36 weist der Kolben 16 eine im Bereich der Kolbenmitte angeordnete Hydrostatiktasche 38 auf, die außen von einem unverlierbar am Kolben 16 vorgesehenen, elastisch gegen den Preßschuh 12 gepreßten Gleit- und/oder Dichtring 40 umgeben ist. Dieser Dichtring wird durch einen Haltering 42 unverlierbar am Kolben 16 gehalten.

Der Kolben 16 besitzt in Richtung der Walzenachse X eine relativ hohe Biegesteifigkeit, die vorzugsweise zumindest ebenso groß ist wie die des Preßschuhs 12.

Die im Kolben 16 vorgesehene Hydrostatiktasche 38 ist über eine vorzugsweise als Drossel wirkende Bohrung 44 mit dem Druckraum 22 des durch eine Zylinder/Kolben-Einheit gebildeten Kraftelements 14 verbunden. Der Druckraum 22 wird über einen im Träger 18 vorgesehenen Kanal 46 mit Druckfluid gespeist, der wiederum mit einer durch den Träger 18 hindurchgehenden Druckfluidleitung verbunden sein kann.

Über den Druckraum 22 wird somit sowohl der Kolben 16 beaufschlagt als auch die Hydrostatiktasche 38 mit Druckfluid versorgt. Grundsätzlich ist es jedoch auch denkbar, die Hydrostatiktasche 38 unabhängig vom Druckraum 22 zu speisen.

Der Kolben 16 ist durch eine zwischen ihm und dem stationären Träger 18 angeordnete, zur Kolbenachse exzentrische elastische Stütze gegen ein Verdrehen gesichert, die im vorliegenden Fall durch eine Blattfeder 48 mit Hammerkopf 50 gebildet ist, deren hammerkopfseitiges Ende in eine kolbenseitige Bohrung 52 eingesetzt ist und deren anderes Ende mit Übermaß in eine im stationären Träger 18 vorgesehene Bohrung 54 eingepreßt ist. In Figur 1 ist die Blattfeder 48 um 45° verdreht dargestellt.

Beim vorliegenden Ausführungsbeispiel besitzen der Zylinder bzw. das flache Zylinderteil 20 und der Kolben 16 des durch eine solche Zylinder/Kolben-Einheit gebildeten Kraftelements 14 jeweils einen kreiszylindrischen Querschnitt.

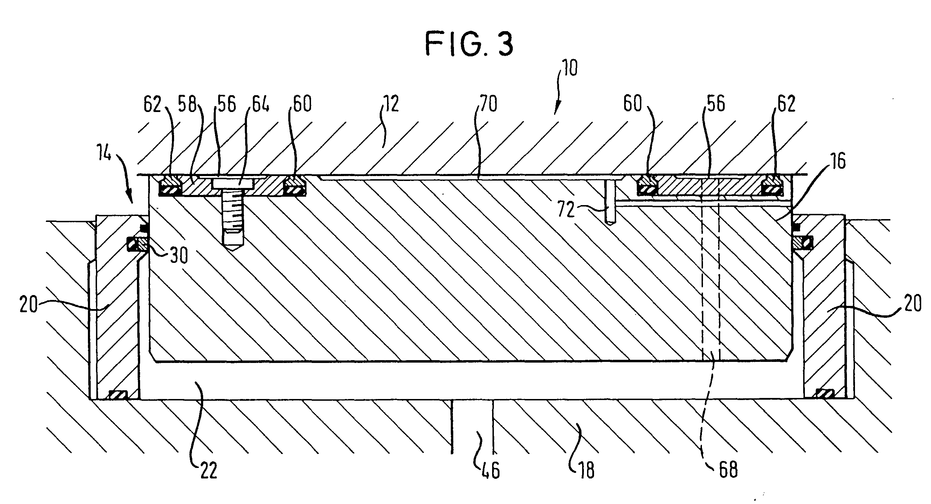

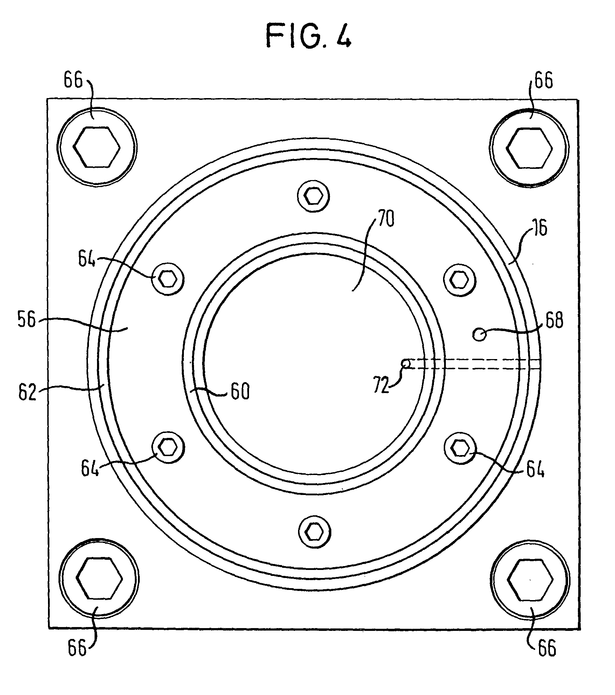

Die in den Figuren 3 und 4 gezeigte weitere Ausführungsvariante einer Preßwalze 10 unterscheidet sich von der gemäß den Figuren 1 und 2 im wesentlichen dadurch, daß anstelle der beiden Kontaktplatten zwischen dem Kolben 16 und dem Preßschuh 12 eine im Kolben 16 angeordnete ringförmige, die Stützkräftekonzentration auf den Kolbenrandbereich bewirkende Hydrostatiktasche 56 vorgesehen ist. Diese ringförmige Hydrostatiktasche 56 ist durch einen inneren und einen äußeren, durch einen Haltering 58 jeweils unverlierbar am Kolben 16 gelagerten sowie elastisch gegen den Preßschuh 12 gepreßten Dichtring 60 bzw. 62 abgedichtet. Der Haltering 58 ist durch Schrauben 64 am Kolben 16 befestigt. Das Zylinderteil 20 ist über Schrauben 66 am stationären Träger 18 fixiert.

Wie anhand von Figur 3 zu erkennen ist, ist die ringförmige Hydrostatiktasche 56 über eine vorzugsweise wiederum als Drossel wirkende Bohrung 68 mit dem Druckraum 22 verbunden.

Innerhalb der ringförmigen Hydrostatiktasche 46 ist eine im mittleren Bereich des Kolbens 16 ausgebildete drucklose Tasche 70 vorgesehen, in die eine nach außen führende Entlastungsbohrung 72 mündet.

Im übrigen besitzt diese Ausführungsvariante zumindest im wesentlichen den gleichen Aufbau wie die in den Figuren 1 und 2 gezeigte Ausführungsform.

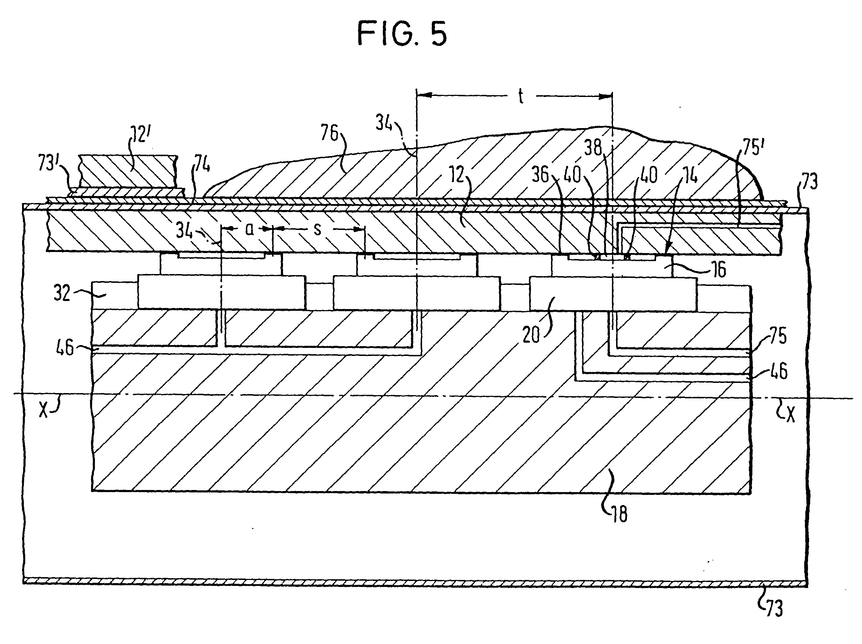

In Figur 5 sieht man im Teil-Längsschnitt einen stationären Träger 18 mit drei benachbarten Kraftelementen 14, die einen Preßschuh 12 an einen um den Träger 18 umlaufenden Preßmantel 73 anpressen, auf dem die zu pressende Papierbahn allein oder mit unterstützendem Filzband als Sandwich 74 liegt. Der Preßkraft der Kraftelemente 14 wirkt eine Stützkraft des Gegenelementes 76 entgegen, das bevorzugt als rotierende Walze ausgeführt ist oder auch als ein Preßschuh 12' mit Preßmantel 73'. Ferner ist in Figur 5 noch eine Druckfluidzuleitung 75 oder 75' zur Hydrostatiktasche 38 unabhängig von der Leitung 46 zu sehen. Desweiteren ist die Walzenachse X angedeutet und die Entfernung der Kraftelemente 14 mit t bezeichnet. Ebenfalls eingezeichnet ist die Entfernung der Schwerpunkte der Stützflächen 36 benachbarter Kolben als s und der Abstand der Schwerpunkte der Flächen 36 von der Kolbenmittelebene 34 als a.

## Patentansprüche

1. Preßwalze (10) zur Behandlung einer Materialbahn in einem mit einer Gegenfläche gebildeten Preßspalt, mit einem sich entlang des Preßspaltes erstreckenden Preßschuh (12), einem über den Preßschuh (12) geführten Preßmantel und insbesondere mehreren an einem stationären Träger (18) abgestützten und in Richtung der Walzenachse (X) hintereinander angeordneten Kraftelementen (14), die vorzugsweise jeweils druckfluidbetätigt und durch eine Zylinder/Kolben-Einheit gebildet sind und durch deren bewegliche Kolben (16) oder dergleichen der Preßschuh (12) beaufschlagbar ist, um den Preßmantel gegen die Gegenfläche zu pressen,
**dadurch gekennzeichnet ,**
**daß** der Kolben (16) wenigstens eines Kraftelements (14) und/oder ein gegenüberliegender Bereich des Preßschuhs (12) so ausgebildet ist, daß die zwischen dem Kolben (16) und dem Preßschuh (12) auftretenden Stützkräfte zumindest im wesentlichen in einander gegenüberliegenden, auf unterschiedlichen Seiten einer zur Walzenachse (X) senkrechten Kolbenmittelebene (34) angeordneten Kolbenrandbereichen konzentriert sind.

2. Preßwalze nach Anspruch 1,
**dadurch gekennzeichnet ,**
**daß** der Kolben (16) und/oder der Preßschuh (12) mit wenigstens zwei in Richtung der Walzenachse (X) einen Abstand voneinander aufweisenden diskreten, die Stützkräftekonzentration bewirkenden erhabenen Kontaktflächen (36) versehen ist.

3. Preßwalze nach Anspruch 2,
**dadurch gekennzeichnet ,**
**daß** die Kontaktflächen durch auswechselbare Kontaktplatten (36) gebildet sind.

4. Preßwalze nach Anspruch 2 oder 3,
**dadurch gekennzeichnet ,**
**daß** zumindest die Kontaktflächen (36) mit jeweils einem Gleitbelag versehen sind, der einen niedrigen Reibungskoeffizienten gegenüber Metall besitzt.

5. Preßwalze nach einem der vorhergehenden Ansprüche, **dadurch gekennzeichnet ,**
**daß** der in Richtung der Walzenachse (X) gemessene Abstand (2a) zwischen den Flächenschwerpunkten (S) der beiden diskreten Kontaktflächen (36) zumindest gleich der halben Kolbenteilung der Kolben (16) einer Mehrzahl von in Richtung der Walzenachse (X) hintereinander angeordneten Kraftelementen (14) und vorzugsweise größer als diese halbe Kolbenteilung ist, so daß sich ein axialer Abstand (s) zwischen den Flächenschwerpunkten (S) der benachbarten Kontaktflächen (36) einander benachbarter Kolben (16) ergibt, der kleiner als die halbe Kolbenteilung ist.

6. Preßwalze nach einem der vorhergehenden Ansprüche, **dadurch gekennzeichnet**,
daß der Kolben (16) zwischen den in Richtung der Walzen achse (X) einen Abstand voneinander aufweisenden diskreten, erhabenen Kontaktflächen (36) wenigstens eine vorzugsweise im Bereich der Kolbenmitte angeordnete Hydrostatiktasche (38) aufweist.

7. Preßwalze nach einem der vorhergehenden Ansprüche, **dadurch gekennzeichnet ,**
**daß** der Kolben (16) in Richtung der Walzenachse (X) eine Biegesteifigkeit besitzt, die zumindest ebenso groß ist wie die des Preßschuhs (12).

8. Preßwalze nach einem der vorhergehenden Ansprüche, **dadurch gekennzeichnet ,**
**daß** zwischen dem Kolben (16) und dem Preßschuh (12) eine vorzugsweise im Kolben (12) angeordnete ringförmige, die Stützkräftekonzentration auf den Kolbenrandbereich bewirkende Hydrostatiktasche (56) vorgesehen ist.

9. Preßwalze nach einem der vorhergehenden Ansprüche, **dadurch gekennzeichnet**,
daß wenigstens eine im Kolben (16) vorgesehene Hydrostatiktasche (38, 56) über eine Drossel (44, 68) mit dem Zylinderdruckraum (22) des durch eine Zylinder/Kolben-Einheit gebildeten Kraftelements (14) verbunden ist.

10. Preßwalze nach einem der vorhergehenden Ansprüche, **dadurch gekennzeichnet ,**
**daß** wenigstens eine im Kolben (16) vorgesehene Hydrostatiktasche unabhängig vom Zylinderdruckraum (22) des durch eine Zylinder/Kolben-Einheit gebildeten Kraftelements (14) mit Druckfluid beaufschlagbar ist.

11. Preßwalze nach einem der vorhergehenden Ansprüche, **dadurch gekennzeichnet ,**
**daß** wenigstens eine dem Kolben zugeordnete Hydrostatiktasche (38, 56) vorgesehen ist, die über eine durch den stationären Träger (18) hindurchgehende Druckfluidleitung beaufschlagbar ist.

12. Preßwalze nach einem der vorhergehenden Ansprüche, **dadurch gekennzeichnet ,**
**daß** wenigstens eine Hydrostatiktasche (38, 56) durch zumindest einen zwischen Kolben (16) und Preßschuh (12) angeordneten, vorzugsweise unverlierbaren und elastisch gegen die betreffende Gegenfläche gepreßten Gleitund/oder Dichtring (40; 60, 62) umgeben ist.

13. Preßwalze nach einem der vorhergehenden Ansprüche, **dadurch gekennzeichnet ,**
**daß** die ringförmige, die Stützkräftekonzentration auf den Kolbenrandbereich bewirkende Hydrostatiktasche (56) durch einen inneren und einen äußeren, vorzugsweise jeweils unverlierbaren und elastisch gegen die betreffende Gegenfläche gepreßten Dichtring (60, 62) abgedichtet ist.

14. Preßwalze nach einem der vorhergehenden Ansprüche, **dadurch gekennzeichnet ,**
**daß** innerhalb der ringförmigen Hydrostatiktasche (56) eine im Kolben (16) ausgebildete drucklose Tasche (70) vorgesehen ist, in die vorzugsweise eine nach außen führende Entlastungsbohrung (72) mündet.

15. Preßwalze nach einem der vorhergehenden Ansprüche, **dadurch gekennzeichnet ,**
**daß** der Kolben (16) als Flachkolben ohne Kolbenstange ausgebildet ist.

16. Preßwalze nach einem der vorhergehenden Ansprüche, **dadurch gekennzeichnet ,**
**daß** der Zylinder des durch eine Zylinder/Kolben-Einheit gebildeten Kraftelements (14) ein am stationären Träger (18) abgestützes flaches, bodenloses Zylinderteil (20) umfaßt, das zur Bildung eines den Kolben (16) beaufschlagenden Druckraums (22) durch den stationären Träger (18) dicht abgeschlossen ist.

17. Preßwalze nach einem der vorhergehenden Ansprüche,
**dadurch gekennzeichnet**,
daß der Kolben (16) gegen ein Verdrehen um seine Achse gesichert ist.

18. Preßwalze nach Anspruch 17,
**dadurch gekennzeichnet**,
daß der Kolben (16) durch wenigstens eine zwischen ihm und dem stationären Träger (18) bzw. dem Zylinderboden angeordnete, zur Kolbenachse exzentrische elastische Stütze (48) gegen ein Verdrehen gesichert ist.

19. Preßwalze nach Anspruch 18,
**dadurch gekennzeichnet**,
daß die elastische Stütze eine Blattfeder (48) mit Hammerkopf (50) umfaßt, deren hammerkopfseitiges Ende vorzugsweise in eine kolbenseitige Bohrung (52) eingesetzt und deren anderes Ende am stationären Träger (18) bzw. am Zylinderboden fixiert ist.

20. Preßwalze nach Anspruch 18,
**dadurch gekennzeichnet**,
daß die elastische Stütze (48) einen elastischen Stab umfaßt, der lose einerseits in eine kolbenseitige Bohrung (52) und andererseits in eine im stationären Träger (18) bzw. im Zylinderboden vorgesehene Bohrung (54) eingesetzt ist.

21. Preßwalze nach einem der vorhergehenden Ansprüche, **dadurch gekennzeichnet**,
daß der Zylinder und der Kolben (16) des durch eine Zylinder/Kolben-Einheit gebildeten Kraftelements (14) jeweils einen kreiszylindrischen Querschnitt besitzen.

## Claims

1. Press roll (10) for treating a material web in a press nip formed with an opposing surface, having a press shoe (12) extending along the press nip, a press cover led over the press shoe (12) and, in particular, a number of force elements (14) which are supported on a stationary carrier (18) and arranged one behind another in the direction of the roll axis (X), which are preferably each operated by a compressed fluid and formed by a piston/cylinder unit and by means of whose movable pistons (16) or the like the press shoe (12) can be acted on in order to press the press cover against the opposing surface, **characterized in that** the piston (16) of at least one force element (14) and/or an opposite region of the press shoe (12) is designed in such a way that the supporting forces occurring between the piston (16) and the press shoe (12) are at least essentially concentrated in mutually opposite piston edge regions arranged on different sides of a piston mid-plane (34) that is perpendicular to the roll axis (X).

2. Press roll according to Claim 1, **characterized in that** the piston (16) and/or the press shoe (12) is provided with at least two discrete, elevated contact surfaces (36) which are at a distance from one another in the direction of the roll axis (x) and effect the supporting-force concentration.

3. Press roll according to Claim 2, **characterized in that** the contact surfaces are formed by interchangeable contact plates (36).

4. Press roll according to Claim 2 or 3, **characterized in that** at least the contact surfaces (36) are each provided with a slippery covering which has a lower coefficient of friction than metal.

5. Press roll according to one of the preceding claims, **characterized in that** the distance (2a) measured in the direction of the roll axis (X) between the area centres of gravity (S) of the two discrete contact surfaces (36) is at least equal to half the piston pitch of the pistons (16) of a plurality of force elements (14) arranged one behind another in the direction of the roll axis (X), and is preferably greater than this half piston pitch, so that the result is an axial spacing (S) between the area centres of gravity (S) of the adjacent contact surfaces (36) of mutually adjacent pistons (16) which is less than half the piston pitch.

6. Press roll according to one of the preceding claims, **characterized in that** the piston (16) between the discrete, elevated contact surfaces (36) which are at a distance from one another in the direction of the roll axis (X) has at least one hydrostatic pocket (38) preferably arranged in the region of the piston centre.

7. Press roll according to one of the preceding claims, **characterized in that** the piston (16) has a bending stiffness in the direction of the roll axis (X) which is at least as great as that of the press shoe (12).

8. Press roll according to one of the preceding claims, **characterized in that**, between the piston (16) and the press shoe (12) there is an annular hydrostatic pocket (56) which is preferably arranged in the piston (12) and effects the supporting-force concentration onto the piston edge region.

9. Press roll according to one of the preceding claims, **characterized in that** at least one hydrostatic pocket (38, 56) provided in the piston (16) is connected via a restrictor (44, 68) to the cylinder pressure chamber (22) of the force element (14) formed by a piston/cylinder unit.

10. Press roll according to one of the preceding claims, **characterized in that** at least one hydrostatic pocket provided in the piston (16) can have compressed fluid applied to it independently of the cylinder pressure chamber (22) of the force element (14) formed by a piston/cylinder unit.

11. Press roll according to one of the preceding claims, **characterized in that** at least one hydrostatic pocket (38, 56) assigned to the piston is provided, and can be acted on via a compressed fluid line passing through the stationary carrier (18).

12. Press roll according to one of the preceding claims, **characterized in that** at least one hydrostatic pocket (38, 56) is surrounded by at least one sliding and/or sealing ring (40; 60, 62) which is arranged between the piston (16) and press shoe (12), is preferably captive and is pressed resiliently against the relevant opposing surface.

13. Press roll according to one of the preceding claims, **characterized in that** the annular hydrostatic pocket (56) effecting the supporting-force concentration onto the piston edge region is sealed off by an inner and an outer sealing ring (60, 62) which, in each case, is preferably captive and pressed resiliently against the relevant opposing surface.

14. Press roll according to one of the preceding claims, **characterized in that**, inside the annular hydrostatic pocket (56) there is provided a pressurefree pocket (70) which is formed in the piston (16) and into which a relief bore (72) leading to the outside preferably opens.

15. Press roll according to one of the preceding claims, **characterized in that** the piston (16) is designed as a flat piston with no piston rod.

16. Press roll according to one of the preceding claims, **characterized in that** the cylinder of the force element (14) formed by a piston/cylinder unit comprises a flat, bottomless cylinder part (20) which is supported on the stationary carrier (18) and, in order to form a pressure chamber (22) that acts on the piston (16), is sealed off tightly by the stationary carrier (18).

17. Press roll according to one of the preceding claims, **characterized in that** the piston (16) is secured against rotation about its axis.

18. Press roll according to Claim 17, **characterized in that** the piston (16) is secured against rotation by means of at least one resilient support (48) which is arranged between it and the stationary carrier (18) or the cylinder bottom and is eccentric with regard to the piston axis.

19. Press roll according to Claim 18, **characterized in that** the resilient support comprises a leaf spring (48) with a hammer head (50) whose hammer-head end is preferably inserted into a bore (52) on the piston side and whose other end is fixed to the stationary carrier (18) or to the cylinder bottom.

20. Press roll according to Claim 18, **characterized in that** the resilient support (48) comprises an elastic rod which, on one side, is inserted loosely into a bore (52) on the piston side and, on the other side, is inserted loosely into a bore (54) provided in the stationary carrier (18) or in the cylinder bottom.

21. Press roll according to one of the preceding claims, **characterized in that** the cylinder and the piston (16) of the force element (14) formed by a piston/cylinder unit each have a circularly cylindrical cross section.

## Revendications

1. Rouleau de presse (10) pour le traitement d'une bande de matériau dans une ligne de contact formée avec une contre-surface, comprenant un sabot de presse (12) s'étendant le long de la ligne de contact, une enveloppe de presse guidée par-dessus le sabot de presse (12) et en particulier plusieurs éléments de force (14) supportés par un support stationnaire (18) et disposés les uns derrière les autres dans la direction de l'axe (X) du rouleau, lesquels sont de préférence chacun commandés par un fluide sous pression et sont formés par une unité cylindre-piston et par l'intermédiaire du piston mobile (16) ou similaire desquels le sabot de presse (12) peut être sollicité, afin de presser l'enveloppe de presse contre la contre-surface,
**caractérisé en ce que**
le piston (16) d'au moins un élément de force (14) et/ou une zone opposée du sabot de presse (12) est configuré(e) de telle sorte que les forces de support se produisant entre le piston (16) et le sabot de presse (12) sont concentrées au moins essentiellement dans des zones latérales du piston situées en face les unes des autres, sur des côtés différents d'un plan médian du piston (34) perpendiculaire à l'axe (X) du rouleau.

2. Rouleau de presse selon la revendication 1, **caractérisé en ce que** le piston (16) et/ou le sabot de presse (12) sont pourvus d'au moins deux faces de contact discrètes convexes (36), causant la concentration des forces de support et écartées l'une de l'autre d'une certaine distance dans la direction de l'axe (X) du rouleau.

3. Rouleau de presse selon la revendication 2, **caractérisé en ce que** les faces de contact sont formées par des plaques de contact échangeables (36).

4. Rouleau de presse selon la revendication 2 ou 3, **caractérisé en ce qu'**au moins les faces de contact (36) sont pourvues chacune d'une garniture de glissement qui possède un coefficient de frottement plus faible que celui du métal.

5. Rouleau de presse selon l'une quelconque des revendications précédentes, **caractérisé en ce que** la distance (2a) mesurée dans la direction de l'axe (X) du rouleau entre les centres de gravité (S) de la surface des deux faces de contact discrètes (36) est au moins égale à la demi-division de piston des pistons (16) d'une pluralité d'éléments de force (14) disposés les uns derrière les autres dans la direction de l'axe (X) du rouleau, et de préférence supérieure à cette demi-division de piston, de sorte que l'on obtienne une distance axiale (s) entre les centres de gravité (S) de la surface des faces de contact voisines (36) de pistons (16) adjacents, qui soit inférieure à la demi-division de piston.

6. Rouleau de presse selon l'une quelconque des revendications précédentes, **caractérisé en ce que** le piston (16) entre les faces de contact discrètes convexes (36), écartées d'une certaine distance l'une de l'autre dans la direction de l'axe (X) du rouleau, présente au moins une poche hydrostatique (38) disposée de préférence dans la zone du centre du piston.

7. Rouleau de presse selon l'une quelconque des revendications précédentes, **caractérisé en ce que** le piston (16) dans la direction de l'axe (X) du rouleau possède une résistance à la flexion qui est au moins aussi grande que celle du sabot de presse (12).

8. Rouleau de presse selon l'une quelconque des revendications précédentes, **caractérisé en ce qu'**entre le piston (16) et le sabot de presse (12) est prévue une poche hydrostatique (56) annulaire, disposée de préférence dans le piston (12), qui cause la concentration de forces de support sur la zone latérale du piston.

9. Rouleau de presse selon l'une quelconque des revendications précédentes, **caractérisé en ce qu'**au moins une poche hydrostatique (38, 56) prévue dans le piston (16) est connectée par le biais d'un étranglement (44, 68) à la chambre de pression (22) du cylindre de l'élément de force (14) formé par une unité cylindre-piston.

10. Rouleau de presse selon l'une quelconque des revendications précédentes, **caractérisé en ce qu'**au moins une poche hydrostatique prévue dans le piston (16) peut être sollicitée par du fluide sous pression indépendamment de la chambre de pression (22) du cylindre de l'élément de force (14) formé par une unité cylindre-piston.

11. Rouleau de presse selon l'une quelconque des revendications précédentes, **caractérisé en ce qu'**il est prévu au moins une poche hydrostatique (38, 56) associée au piston, laquelle peut être sollicitée par le biais d'une conduite de fluide sous pression traversant le support stationnaire (18).

12. Rouleau de presse selon l'une quelconque des revendications précédentes, **caractérisé en ce qu'**au moins une poche hydrostatique (38, 56) est entourée par au moins une bague de glissement et/ou d'étanchéité (40; 60, 62) disposée entre le piston (16) et le sabot de presse (12), de préférence imperdable et pressée élastiquement contre la contre-surface concernée.

13. Rouleau de presse selon l'une quelconque des revendications précédentes, **caractérisé en ce que** la poche hydrostatique (56) annulaire, causant la concentration de forces de support sur la zone latérale du piston, est rendue étanche par une bague d'étanchéité (60, 62) interne et externe, respectivement, de préférence imperdable à chaque fois et pressée élastiquement contre la contre-surface concernée.

14. Rouleau de presse selon l'une quelconque des revendications précédentes, **caractérisé en ce qu'**il est prévu à l'intérieur de la poche hydrostatique annulaire (56) une poche sans pression (70) formée dans le piston (16), dans laquelle débouche de préférence un alésage de décharge (72) conduisant vers l'extérieur.

15. Rouleau de presse selon l'une quelconque des revendications précédentes, **caractérisé en ce que** le piston (16) est formé en tant que piston plat sans tige de piston.

16. Rouleau de presse selon l'une quelconque des revendications précédentes, **caractérisé en ce que** le cylindre de l'élément de force (14) formé par une unité cylindre-piston comprend une partie de cylindre (20) plate sans fond, supportée sur un support stationnaire (18), qui est fermée de manière hermétique par le support stationnaire (18) pour former une chambre de pression (22) sollicitant le piston (16).

17. Rouleau de presse selon l'une quelconque des revendications précédentes, **caractérisé en ce que** le piston (16) est bloqué en rotation autour de son axe.

18. Rouleau de presse selon la revendication 17, **caractérisé en ce que** le piston (16) est bloqué en rotation par au moins un appui (48) élastique excentrique par rapport à l'axe du piston, disposé entre le piston et le support stationnaire (18) ou le fond du cylindre.

19. Rouleau de presse selon la revendication 18, **caractérisé en ce que** l'appui élastique comprend un ressort à lames (48) avec une tête rectangulaire (50), dont l'extrémité du côté de la tête rectangulaire est de préférence insérée dans un alésage (52) du côté du piston et dont l'autre extrémité est fixée au support stationnaire (18) ou au fond du cylindre.

20. Rouleau de presse selon la revendication 18, **caractérisé en ce que** l'appui élastique (48) comprend une barre élastique qui est insérée lâchement d'une part dans un alésage (52) du côté du piston et d'autre part dans un alésage (54) prévu dans le support stationnaire (18) ou dans le fond du cylindre.

21. Rouleau de presse selon l'une quelconque des revendications précédentes, **caractérisé en ce que** le cylindre et le piston (16) de l'élément de force (14) formé par une unité cylindre-piston possèdent chacun une section transversale cylindrique circulaire.
